# EUROPEAN PATENT APPLICATION

(11) **EP 0 568 276 A1**
(43) Date of publication of application: **03.11.1993**
(21) Application number: 93303165.0
(22) Date of filing: 22.04.1993
(51) Int. Cl.: G01B 11/26

(54) **Testing of structures**

(30) Priority: 25.04.1992 GB 9208982
(71) Applicant: BRITISH AEROSPACE PUBLIC LIMITED COMPANY, Farnborough, Hants. GU14 6YU (GB)
(72) Inventor: Widdowson, Malcolm H., Preston, Lancashire PR4 1AX (GB)
(74) Representative: Eastmond, John

(57) **Abstract**

Apparatus for determining the relative positions of two points on a structure such as an aircraft utilises a reference frame (20) which is positioned on the aircraft at a point of high structural integrity. The frame (20) carries a plurality of location points (24) each corresponding to points (26) on the aircraft structure, the alignment and/or location of which require calibration. To facilitate calibration laser emitter/detector units (35) are positioned at the appropriate point to be tested (26) and the corresponding frame location point (24). A detector (38) of the detector/emitter (35) produces a signal which indicates the point of incidence thereon of the strongest part of the laser beam emitted from the corresponding emitter/detector unit (35). This signal is processed by a microcomputer (48) running a program which displays instructions to an operator to move the mounting point (26) approximately so as to put it in its correct position as dictated by the reference frame (20).

## Description

This invention relates to apparatus for determining the relative positions of two points on a structure.

For structures such as aircraft it is extremely important that various points on the structure are in certain positions relative to one another. These points could be, for example, mounting points for an inertial navigation unit, head-up display, gun, missile launcher, etc.

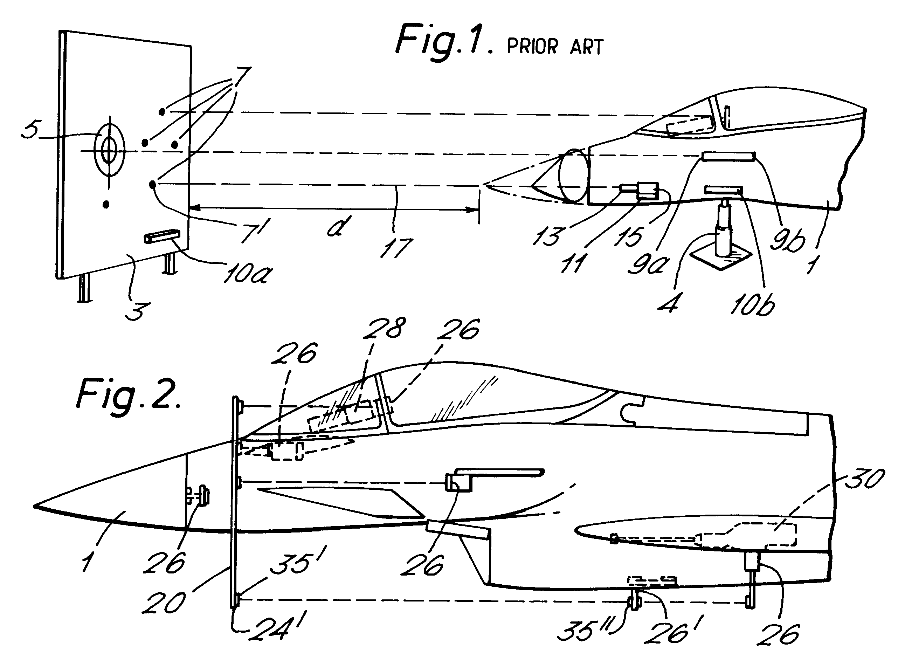

Figure 1 of the accompanying drawings shows a known method of testing the relative positions of various points on an aircraft 1, the nose cone of which is hinged open for testing. The method employs a large moveable board 3, positioned some 20 metres or so away from the aircraft body. (Such a large distance is necessary to give the required accuracy of measurement of any angular offset.) The aircraft is levelled by adjusting the extension of telescopic jacks (one 4 at the nose, and two at the central area of the body - not shown) on which the aircraft 1 is supported. A main target 5 is marked on the board along with various other targets 7, the relative positions of which are calculated as a function of the relative positions of various points on the aircraft. The system is set up by an operator looking through forward and aft sights 9a and 9b mounted on the aircraft 1 and requesting another operator to move the board 3 until the line of sight through the forward and aft sights 9a and 9b coincides with the target rings of the main target 5, while preserving the distance d between the aircraft 1 and the board 3. Clinometers 10a and 10b are positioned on the board 3 and the aircraft 1 in order that the relative roll attitudes of the board 3 and aircraft 1 can be monitored during testing.

When this step is complete, a visible-light laser is mounted in turn on each point of the aircraft which requires testing. The mounting at each of the points is such that the laser is orientated towards the board 3.

For example, if the position of the inertial navigation unit 11 was to be tested, a laser 13 would be mounted on the inertial navigation unit's mounting 15. The mounting 15 would then be moved by an operator on the aircraft until another operator at the board 3 indicates to him that the laser beam 17 falls within the appropriate target 7' on the board 3. As will be appreciated, this process is extremely time-consuming and prone to error. For a typical aircraft, to test all the relevant points on the structure, it commonly takes two men three days to complete.

British Patent No. 1554010 describes a system for measuring the movement of an aircraft wing relative to the fuselage during flight. Two infra-red beams are emitted from separate locations on the wings, and movement is measured by determining where these beams are incident on respective CCD arrays.

An object of the present invention is to provide an improved means of testing structures.

According to the invention there is provided apparatus for determining the relative positions of two points on a structure, characterised in that the apparatus includes electromagnetic radiation beam emitter means for emitting an electromagnetic radiation beam, electromagnetic radiation beam detection means for producing electrical signals indicative of the point of incidence of an electromagnetic radiation beam thereon, first attachment means for attaching one of said emitter means and detection means to one of the two points, and second attachment means for attaching the other of said emitter means and detection means to the other of said two points such that the radiation beam emitted from said emitter means is incident on said detection means.

By employing electromagnetic radiation beam detection means to sense the point of incidence of an electromagnetic radiation beam thereon, the inaccuracies inherent in the known system employing a board and an operator who observes when a laser beam strikes a target on the board may be reduced. This improvement in accuracy means that both the electromagnetic radiation beam emitter means and detection means may be attached to the structure itself because not such a large distance is required between them. Furthermore, only one operator is required to perform the testing.

The first attachment means may comprise a frame for connection to the structure at a predetermined position and which includes a plurality of location point means for ' locating the at least one of said emitter means and detection means in predetermined locations which, when the apparatus is in use, correspond to respective points at which said second attachment means is attached. By having the location points on a frame which is attached in use to the structure considerable time may be saved when setting up the apparatus. Advantageously, the first attachment means comprising the frame is made from carbon fibre and has a honeycomb internal structure, thus making it light, highly rigid and comparatively temperature stable.

The first and/or second attachment means may attach respective units to the structure, these units comprising an emitter and a receiver. The units may further comprise a roll transducer for detecting movement substantially about a central axis of the unit.

Where both the first and second attachment means attach a unit to the structure, preferably the units are moveable between an inverted and a non-inverted position, and are located such that, in either of these positions, the beam of electromagnetic radiation from the emitter of each of the units is incident upon the detector of the other unit, the paths of the beams being substantially parallel to one another in each of the inverted and non-inverted positions. This configuration is particularly advantageous for calibrating the apparatus if the first and second attachment means are attached to the structure at points of high structural integrity. By taking readings of the points of incidence of each of the electromagnetic radiation beams when the units are in their inverted and non-inverted positions, the degree and nature (for example lateral offset or angular deflection) of any misalignment may be detected and compensated for when measuring the relative positions of other points on the structure.

For a better understanding of the invention, an embodiment of it will now be described by way of example only, and with reference to the remaining Figures, Figures 2 - 7, of the accompanying drawings, in which:-
Figure 2 shows a side elevation of part of an aircraft under test;
Figure 3 shows a view of the aircraft of Figure 2 from underneath;
Figure 4 shows a part front elevation of the aircraft of Figure 2;
Figure 5 is a schematic diagram of a processing system for use with test apparatus;
Figure 6 shows two emitter/detector units positioned for testing a structure;
Figure 7 shows a perspective view of an emitter/detector unit complete with a roll transducer;
Figure 8 shows a side elevation of a calibration structure for calibrating testing apparatus;
Figure 9 shows a cross-section, along the line A-A, of the structure of Figure 8; and,
Figure 10 shows an example of a graphical display on a monitor shown in Figure 5 during a test on an aircraft.

To improve understanding of the drawings, like elements which appear in more than one Figure are designated by the same reference number.

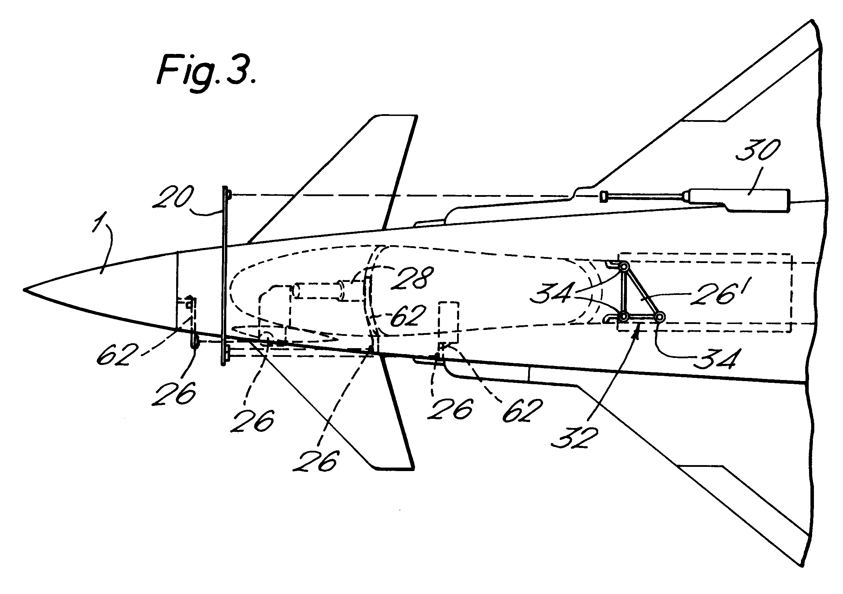

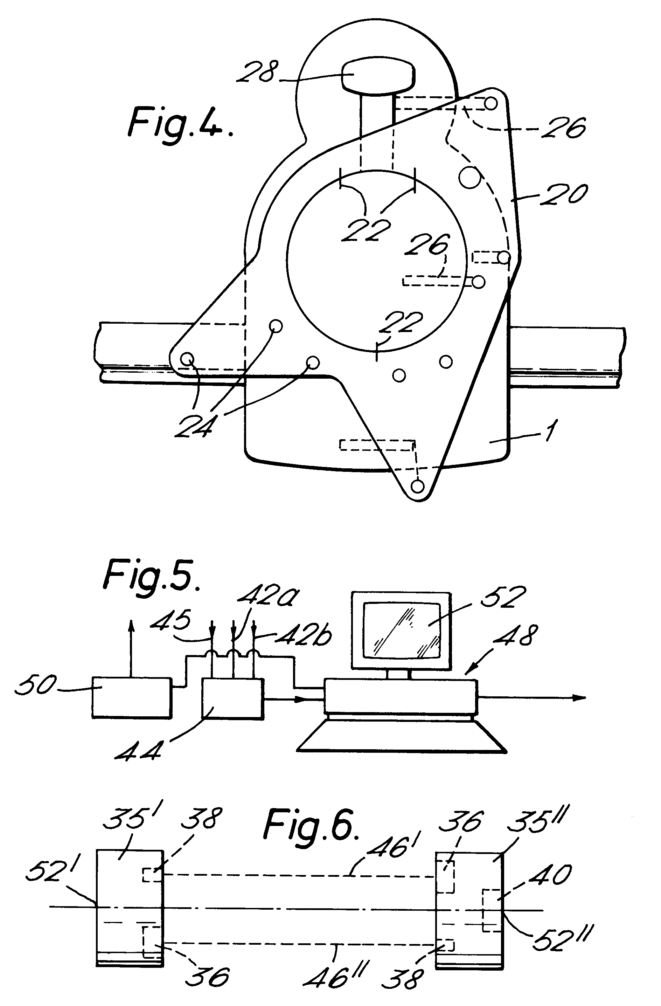

An aircraft 1 to be tested with apparatus in accordance with the invention is illustrated in Figs. 2-4. A reference frame 20 is attached to a bulkhead of the aircraft at mounting points 22 (see Fig. 4). The reference frame 20 has a plurality of location points 24 onto which emitter and/or detector units may be mounted. These location points 24 are laterally displaced from the correct positions of the mounting points 26 of various items of equipment on the aircraft 1, such as a head-up display 28 and gun 30.

A calibration mount 26' is located in the undercarriage bay region 32 of the aircraft by three spherically-ended location pins 34.

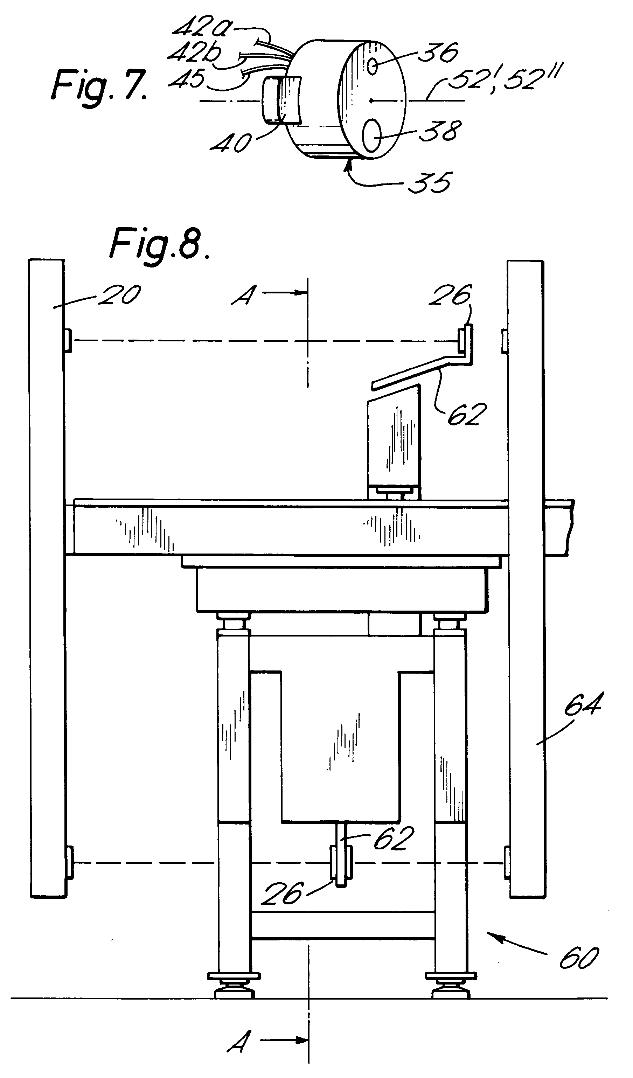

Emitter/detector units are shown in Figs. 6 and 7 generally at 35, and comprise a narrow beam modulated laser-light emitter 36, a laser detector 38 and a roll transducer 40. The laser detector 38 (such as that available from Fixture-Laser Ltd, UK) comprises a thin, light-sensitive layer of silicon. An electric current is created at the point on the detector 38 struck by the beam. The resistance in the silicon layer gives rise to a splitting up of the current, the differing strengths of which are measured by electrodes (not shown) in the detector 38. Thus, it is possible to determine the position of the strongest, central part of the laser beam. With this information, the laser detector 38 produces two analog signals 42a and 42b which are fed to respective channels of an analog to digital convertor (ADC) unit 44 of a processing system shown in Fig. 5 via two channels of an amplifier (not shown) - such as that available from Fixture-Laser Ltd, UK. The analog signals 42a and 42b are indicative of that part of the laser detector 38 on which the strongest part of a laser beam was incident. The roll transducer 40 provides an analog signal 45 which is fed into another channel of ADC unit 44 via another channel of the amplifier. The signal 45 is indicative of the orientation of the emitter/detector unit 35 about its central axis 52, i.e. of the roll attitude of the structure on which it is mounted..

In the calibration procedure one emitter/detector 35 is placed on calibration mounting point 26' and another on the appropriate mounting point 24' on reference frame 20. Only one of the emitter/detector units 35 requires a roll transducer, so for example, the unit 35' on the reference frame 20 may not include a roll transducer. The emitter/detector units 35 are positioned so that they face one another and the mountings are such that the laser beam 46' emitted from one unit 35' is incident on the detector of the other unit 35'' and, likewise, the laser beam 46'' from the other unit is incident on the detector of the first unit. Thus, the paths of the laser beams 46' and 46'' are substantially parallel to one another as shown in Fig. 6.

When the units 35' and 35'' are attached to their respective mounts 24' and 26' the analog to digital convertor 44, micro-computer 48, emitter/detector unit 35, and power supply 50 comprising the processing system are activated. The computer 48 runs a program which, inter alia, records digital signals from analog to digital convertor 44 representative of the respective positions of laser beams 46' and 46'' on the detectors of the emitter/detector units 35' and 35'' and of the orientation of the units 35'' as measured by the roll transducer 40. A program we have used is supplied by Fixture Laser AB, Sweden. When this recording is completed, both of the emitter/detector units 35' and 35'' are rotated through 180° about their central axes 52' and 52'' on their respective mounts 24' and 26'. The points of incidence of the respective laser beams are again recorded by the computer program. By taking measurements in both the inverted and non-inverted orientations of the emitter/detector units, the nature of any misalignment of the axes 52' and 52'' can be calculated, i.e. whether the units 35' and 35'' are laterally offset (that is, the central axes of the units are not co-axial) and/or are angularly offset (that is, the central axes of the units are not parallel with one another). The roll transducers 40 enable the correctness of the orientations of each of the emitter/detector units 35 to be checked.

Because the calibration mounting points 24' and 26' are attached to the aircraft at positions of high structural integrity (the bulkhead and undercarriage bay region 32 respectively) it is assumed that any offset is due to errors in the reference frame 20 or the mounting points 24' and 26'. These errors can be removed by mechanically adjusting the location of either of the mounts (for example with the aid of the computer program as described below), or can be compensated for by the computer program.

The units 35' and 35'' are then removed from the calibration mounts and replaced with separate emitter and detection units, one positioned on each of the respective mounts 24' and 26'. This allows any relative movement between the calibration mounting points to be detected during the subsequent testing procedure.

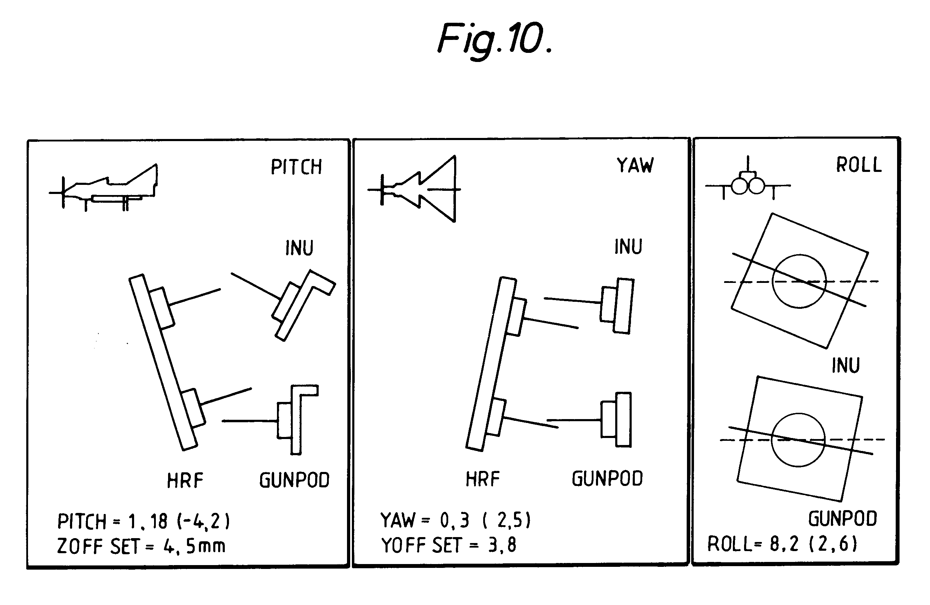

The positions of various mounting points 26 on the aircraft 1 are then tested by positioning emitter/detector unit 35'' thereon. Emitter/detector unit 35' is then placed on the corresponding location point 24 on the reference frame 20. A test procedure for the mounts in question, similar to that performed during calibration, then takes place. Any offset for the relevant mounting point 26 (other than that compensated for by the computer program) indicates that the mount 26 is incorrectly positioned. When this is the case, the computer program running on computer 48 displays on the monitor 52 a display which indicates graphically what movement of the relevant mounting point 26 in the pitch, roll and yaw planes is required for it to be correctly positioned. The operator is then able to move the mounting point to the correct position by observing changes in the display on monitor 52. An example of the graphical display which might appear on monitor 52 is shown in Figure 10. As can be seen the display indicates pictorially the mis-alignment of the system under test in the pitch, yaw and roll planes.

This process is repeated for each of the mounting points 26.

In this embodiment the reference frame 20 is made from carbon fibre and has a honeycomb internal structure in order to make it lightweight and highly rigid.

The mounting points 26 for the aircraft may conveniently be detachable units, known as interface adaptors, which are specifically configured to support the emitter/detector units 35.

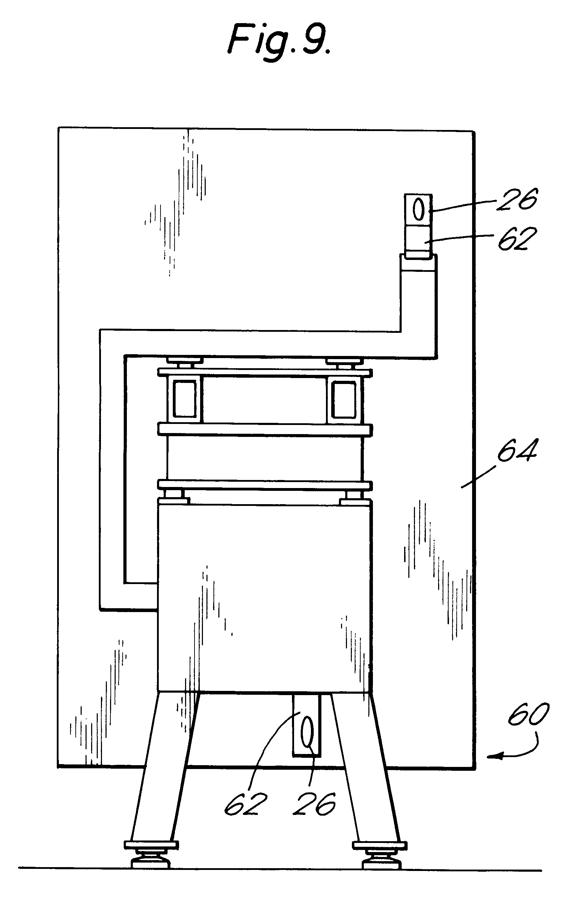

The interface adaptors and reference frame 20 may be initially set-up and checked using a dedicated calibration structure shown generally at 60 in Figs. 8 and 9.

The calibration structure 60 represents a theoretical airframe of the aircraft to be tested, and includes mounting points 26 which correspond in their positions on the theoretical airframe to where they should ideally be on the actual aircraft. The design of the calibration structure 60 is such that it provides an extremely accurate and stable location for the interface adaptors 62 when mounted on the respective mounting points 26.

A master reference frame 64 is attached to the calibration structure 60 at one end, and has a plurality of location points which are in the ideal position for the aircraft to be tested.

To test a reference frame 20, it is mounted on the other end of the structure 60, laterally displaced from the master reference frame 64. Mounting is by way of two positional control spherically-ended pins (not shown), and the frame is secured in place by a torque load screw (not shown) on the structure 60. Emitter/detector units 35 are then positioned at corresponding location points on the master reference frame 64 and the reference frame 20 being tested. Signals from the units 35 are fed into the processing system as in aircraft testing (as described above), and either the position of the location points on the reference frame 20 are changed so that they are precisely aligned with those on the master reference frame 64, or the misalignment is recorded by the computer program so that it can be compensated for in subsequent aircraft testing.

The interface adaptors 62 may be tested to ensure that they occupy the correct position with respect to the reference frame 20. This is tested in the manner as previously described, i.e. by positioning emitter/detector units 35 on each location point on the reference frame, and each corresponding interface adaptor. The interface adaptors may be altered or errors can be compensated for by the computer program.

These calibration techniques ensure that any errors detected when testing aircraft can be assumed to be real, rather than errors in the testing equipment.

Of course, the reference frame 20 and the interface adaptors 62 can be rechecked as frequently as required.

## Claims

1. Apparatus for determining the relative positions of two points on a structure characterised in that the apparatus includes electromagnetic radiation beam emitter (35,36) for emitting an electromagnetic radiation beam (46), electromagnetic radiation beam detector (35,38) for producing electrical signals (42a, 42b) indicative of the point of incidence of an electromagnetic radiation beam thereon, first attachment means (20) for attaching one of said emitter and detector (35) to one (24) of the two points, and second attachment means (34) for attaching the other of said emitter means and detector (35) to the other (26) of said two points such that the radiation beam emitted from said emitter means is incident on said detection means.

2. Apparatus according to claim 1, characterised in that said first attachment means comprises a frame (20) for connection to the structure at a predetermined position and which includes a plurality of location points (24) for locating the at least one of said emitter means and detector (35) in predetermined locations which, when the apparatus is in use, correspond to respective points (26) at which said second attachment means is attached.

3. Apparatus according to claims 1 or 2 characterised in that said first attachment means (20) is made from carbon fibre and has a honeycomb internal structure.

4. Apparatus according to claim 1, 2 or 3 characterised in that said first attachment means (20) attaches a unit (35') to the structure, the unit(35') comprising an emitter and a receiver.

5. Apparatus according to any preceding claim characterised in that said second attachment means (34) attaches a unit (35'') to the structure, the unit comprising an emitter and a receiver (35'').

6. Apparatus according to claim 4 or 5 characterised in that said unit further comprises roll transducer (40) for detecting movement substantially about a central axis of the unit.

7. Apparatus according to claim 5, when dependent on claim 4, or claim 6 characterised in that said units (35) are moveable between an inverted and a non-inverted position, and are located such that in either of those positions, the beam of electromagnetic radiation (46) from the emitter (35') of each of the units is incident upon the detector (35'')of the other unit, the paths of the beams being substantially parallel to one another in each of said inverted and non-inverted positions.
